# EUROPEAN PATENT APPLICATION

(11) **EP 2 919 101 A1**
(43) Date of publication of application: **16.09.2015**
(21) Application number: 15157650.1
(22) Date of filing: 04.03.2015
(51) Int. Cl.: G06F 3/042

(54) **Touch recognition device and display apparatus using the same**

(30) Priority: 11.03.2014 KR 20140028484
(71) Applicant: Samsung Electronics Co., Ltd, Gyeonggi-do 443-742 (KR)
(72) Inventor: Sohn, Sang-hyun, Gyeonggi-do (KR); Jeon, Wook-jae, Gyeonggi-do (KR)
(74) Representative: Appleyard Lees

(57) **Abstract**

Provided is a touch recognition device and a display apparatus using the same. The touch recognition device includes: an image screen configured to display an image; a light source configured to emit light toward the image screen; a camera provided in the rear of the image screen and configured to sense infrared light reflected or received from an object contacting or approaching the display panel; and a diffusion transmitter provided between the image screen and the camera, configured to diffuse the emitted light in response to the light source emitting the light, and configured to transmit the infrared in response to the light source emitting no light.

## Description

### BACKGROUND

### Field

Apparatuses and methods consistent with exemplary embodiments relate to a touch recognition device which controls an image displayed on a screen in such a manner that a hand or an object contacts the screen, and provides an interface with the screen, and more particularly to a touch recognition device which recognizes a user's hand touching a screen through a camera installed in the rear of the screen to be touched or recognizes an object contacting the screen, and a display apparatus using the same.

### Description of the Related Art

A user's control for a screen has been changed into an intuitive manner. The early interface with a screen using a keyboard has become more convenient through a mouse, and has recently been developed as an interface for more directly and intuitively controlling the screen.

In a smart phone or other smart devices, an interface has already been developed for a user to directly touch a screen with a user's finger. The foregoing direct touching manner has been developed with regard to a larger screen.

By a user's various demands for touch recognition on a larger screen, recognition of multiple fingers, recognition of any objects, etc., there has recently been developed technology of using a camera to photograph and analyze a touching figure. The technology of placing the camera in front of an image screen to be touched by a user has been widely commercialized and applied, but there is a limit to finding out an accurate contact position due to a shadow formed by a user. Thus, in frustrated total internal reflection (FTIR) and diffused illumination (DI) manners that the camera is installed on the rear of the image screen to be touched by a user and accurately recognizes a user's touch position, an infrared image reflected from fingers is received to thereby accurately recognize the touched position.

The image screen touched by a finger has two functions as follows. One function is to display an image, and the other function is to reflect infrared (IR) light at a position touched by a finger and informs the IR camera of the touched position.

In the related art, a liquid crystal display (LCD) apparatus includes a backlight using a light source such as a cold cathode fluorescent lamp (CCFL) or a light emitting diode (LED), and LCD cell for displaying a color image. In order to place the infrared LED and the IR camera on the rear of the image screen, the infrared LED and the IR camera have to be installed within the backlight.

The backlight includes a reflection plate for increasing optical efficiency, and a diffusion plate including an optical film or sheet for uniformly diffusing and condensing the light emitted from the light source. Therefore, there is technical difficulty in installing the infrared LED and the IR camera. That is, if the IR camera is placed between the diffusion plate and a white (W)-LED, it is difficult to recognize a touch because the diffusion plate interrupts the infrared signal reflected from a user. On the other hand, if the IR camera is placed between the image screen and the diffusion plate, blotches are formed on the screen due to the shadow of the IR camera because the IR camera is placed on a path of the diffused light traveling to the LCD screen.

### SUMMARY

One or more exemplary embodiments may provide a touch recognition device and a display apparatus using the same, in which a diffusion plate prevents infrared recognition even though an IR camera is interposed between the diffusion plate and a white light source within a backlight.

According to an aspect of an exemplary embodiment, there is provided a touch recognition device including: an image screen configured to display an image; a light source configured to emit light toward the image screen; a camera provided in the rear of the image screen and configured to detect at least one of infrared reflected and input from an object approaching or contacting the image screen; and a diffusion transmitter provided between the image screen and the camera configured to diffuse the emitted light in response the light source emitting the light and configured to transmit the infrared in response to no light being emitted from the light source.

The touch recognition device may further include an infrared emitter provided in the rear of the image screen and configured to emit infrared.

The infrared emitter, the camera and the diffusion transmitter may be off in response to the light source emitting the light.

The infrared emitter, the camera and the diffusion transmitter may operate in response to no light being emitted by the light source.

The diffusion transmitter may include a liquid crystal panel including liquid crystal; and transparent electrodes arranged at opposite sides of the liquid crystal panel and configured to apply voltage to the liquid crystal.

The touch recognition device may further include a driver configured to apply voltage between the transparent electrodes arranged at the opposite sides of the liquid crystal panel.

The driver may be configured to apply voltage to the transparent electrodes in accordance with a change in image frames of the image displayed on the image screen.

The driver may be configured to alternate between on and off to apply the voltage in units of at least one image frame.

The diffusion transmitter may be configured to switch between a light diffusion mode and an infrared detection mode within one frame of the image signal.

The diffusion transmitter may be configured to switch between the light diffusion mode and the infrared detection mode within 1/60 seconds.

According to an aspect of another exemplary embodiment, there is provided a display apparatus including: a display panel configured to display an image; a backlight configured to emit light to the display panel and comprising a camera configured to sense infrared light reflected or received from an object contacting or approaching the display panel; and a diffusion transmitter provided between the display panel and the camera, configured to diffuse light from the backlight when the backlight emits the light and configured to transmit the infrared light when the backlight emits no light.

The diffusion transmitter may be configured to diffuse or transmit light in accordance with voltage appliance.

The backlight may further include an infrared emitter

The infrared emitter, the camera and the diffusion transmitter may be inactive while the backlight emits light.

The infrared emitter, the camera and the diffusion transmitter may be active while the backlight emits no light.

The diffusion transmitter may include a liquid crystal panel including liquid crystal; and transparent electrodes arranged at opposite sides of the liquid crystal panel and configured to apply voltage to the liquid crystal.

The display apparatus may further include a driver configured to apply voltage between the transparent electrodes arranged at the opposite sides of the liquid crystal panel.

The driver may be configured to apply voltage to the transparent electrodes in accordance with change in image frames displayed on the image screen.

The driver may be configured to alternate between on and off to apply the voltage in units of at least one image frame.

According to an aspect of another exemplary embodiment, there is provided a touch recognition device including: an image screen configured to display an image; a light source configured to emit light toward the image screen in a first mode; a camera provided in the rear of the image screen, configured to detect at least one of infrared reflected and input from an object approaching or contacting the image screen in a second mode; and a diffusion transmitter provided between the image screen and the camera and configured to switch between the first mode and the second mode within one frame of the image signal.

The diffusion transmitter may include: a liquid crystal panel comprising liquid crystal; and transparent electrodes arranged at opposite sides of the liquid crystal panel and configured to apply voltage to the liquid crystal.

The touch recognition device may further include a driver configured to apply voltage between the transparent electrodes according to the first mode or the second mode.

The touch recognition device may further include an infrared emitter provided in the rear of the image screen and configured to emit the infrared.

In the first mode, the infrared emitter and the camera may be off, and in the second mode, the light source may emit no light.

### BRIEF DESCRIPTION OF THE DRAWINGS

The above and/or other aspects will become apparent and more readily appreciated from the following description of exemplary embodiments, taken in conjunction with the accompanying drawings, in which:

FIGs. 1 and 2 are views schematically showing a display apparatus employing a touch recognition device according to an exemplary embodiment; and

FIG. 3 is a view showing operation timing of elements of the touch recognition device according to an exemplary embodiment.

### DETAILED DESCRIPTION OF EXEMPLARY EMBODIMENTS

Below, exemplary embodiments will be described in detail with reference to accompanying drawings. The following embodiments describe only configurations directly related to the inventive concept, and the descriptions the other configurations will be omitted. However, it will be understood that the omitted configurations are not unnecessary in realizing an apparatus or system to which the inventive concept is applied. Further, like numerals refer to like elements throughout.

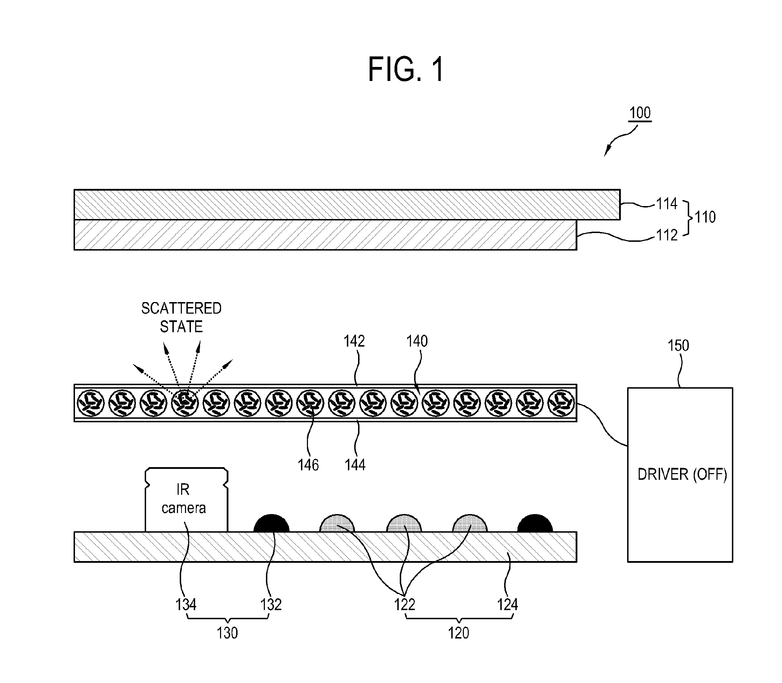

FIG. 1 is a view schematically showing a structure of a display apparatus 100 employing touch recognition technology according to an exemplary embodiment. As shown in FIG. 1, the display apparatus 100 may include an image screen 110 for displaying an image, a backlight 120, a touch recognizing portion 130, a diffusion transmitter 140 for diffusing and transmitting light, and a driver 150 for driving the diffusion transmitter 140 to diffuse and transmit light.

The image screen 110 may include a display panel 112 and a protection panel 114.

The display panel 112 can display an image based on an image signal. The display panel 112 may be achieved by various display types such as liquid crystal, a light-emitting diode (LED), an organic light-emitting diode (OLED), etc., but the exemplary embodiment is not limited thereto.

That is, the display panel 112 may include additional elements in accordance with the types. For example, if the display panel 112 is of the liquid crystal type, the display panel 112 may further include a prism film, a polarization film, an LCD cell, a color filter, etc. in accordance with polarization characteristics and condensing characteristics for light. Under ordinary knowledge in the art, some films may be added or removed.

The protection panel 114 protects the display panel 112 from external shocks, and prevents the display panel 112 from contamination due to a user's touch.

The backlight 120 may include a plurality of W-LEDs 122 for emitting white light, and a reflection plate 124 for reflecting reflected or scattered light to thereby improve optical efficiency. In addition, the backlight 120 may further include a dual brightness enhance film (DBEF, not shown), a prism sheet (not shown), a light guide plate (not shown), etc.

The touch recognizing portion 130 may include a plurality of infrared (IR)-LEDs 132 for emitting infrared light and an IR-camera 134 for recognizing the infrared light reflected or output from the image screen 110.

The IR-LED 132 emits the infrared light toward the image screen, and the emitted infrared light is returned as being reflected from an object contacting or approaching the image screen. If not a finger or an object but an infrared (IR) pen (not shown) is used, the IR-LED 132 may be omitted.

The IR camera 134 recognizes the infrared light emitted from the IR-LED 132 and reflected from the object, or recognizes the infrared light input by an external instrument, e.g., by the IR pen (not shown), thereby precisely recognizing a position of the object or the IR pen.

The diffusion transmitter 140 is arranged to be spaced apart at a predetermined distance from the IR camera 134 so that the IR camera 134 can be placed between the backlight 120 and the diffusion transmitter 140.

The diffusion transmitter 140 includes a first transparent electrode 142 arranged on one side of a panel including liquid crystal materials 146, and a second transparent electrode 144 arranged on the other side of the panel.

The liquid crystal materials 146 may include nematic liquid crystal as a substance in which orientation of liquid crystal molecules may be varied depending on applied voltage.

The first and second transparent electrodes 142 and 144 may be formed on opposite sides of the panel by vapor deposition. The first and second transparent electrodes 142 and 144 may formed using indium tin oxide (ITO), indium zinc oxide(IZO), transparent conductive polymers, etc.

In the diffusion transmitter 140, a distorted angle of molecular arrangement of the liquid crystal materials 146 is changed to transmit light or infrared light when voltage is applied between the first and second transparent electrodes 142 and 144, but the molecular arrangement of the liquid crystal materials 146 returns to original distortion not to scatter the light when the applied voltage is cut off. At this time, the molecules of the liquid crystal materials 146 are oriented at a proper angle in accordance with the applied voltage, thereby transmitting and diffusing the light.

The driver 150 is a circuit for applying voltage to the first and second transparent electrodes 142 and 144 of the diffusion transmitter 140, and operates in units of video frame displayed on the image screen 110. That is, if an image signal is displayed at 60 Hz or 120Hz, the driver 150 turns on/off the first and second transparent electrodes 142 and 144 with voltage of 60Hz or 120Hz. Therefore, the driver 150 may perform alternation between on and off per 1/60 or 1/120 second. However, the exemplary embodiment is not limited thereto. That is, the driver 150 may also perform alternation between on and off in units of two or more frames.

In the display apparatus 100 shown in FIG. 1, the driver 150 does not apply voltage to the first and second transparent electrodes 142 and 144 of the diffusion transmitter 140, so that the diffusion transmitter 140 can diffuse the light. While the W-LED 122 operates to emit white light for displaying an image and the diffusion transmitter 140 performs a diffusing function of the emitted light from the W-LED 122, the IR-LED 132 and the IR camera 134 are turned off due to interruption of the diffusion transmitter 140.

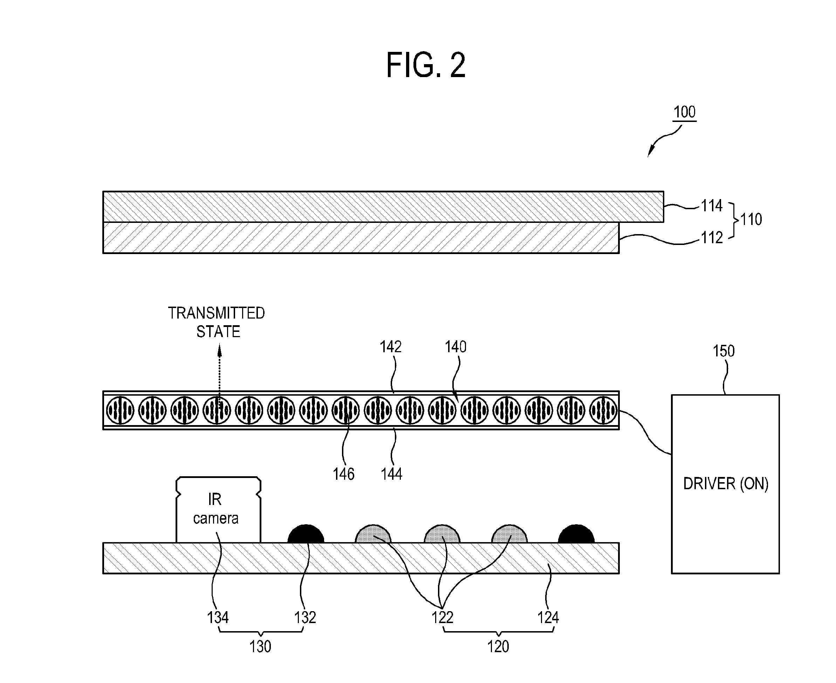

In the display apparatus 100 shown in FIG. 2, the driver 150 applies voltage to the first and second transparent electrodes 142 and 144 of the diffusion transmitter 140, so that the diffusion transmitter 140 can serve to transmit the light and infrared light. At this time, while the diffusion transmitter 140 performs a transmission function, the IR-LED 132 and the IR camera 134 are turned on due to no interruption of the diffusion transmitter 140. That is, while the the IR-LED 132 and the IR camera 134 are turned on , the W-LED 122 emitting white light for displaying an image is turned off.

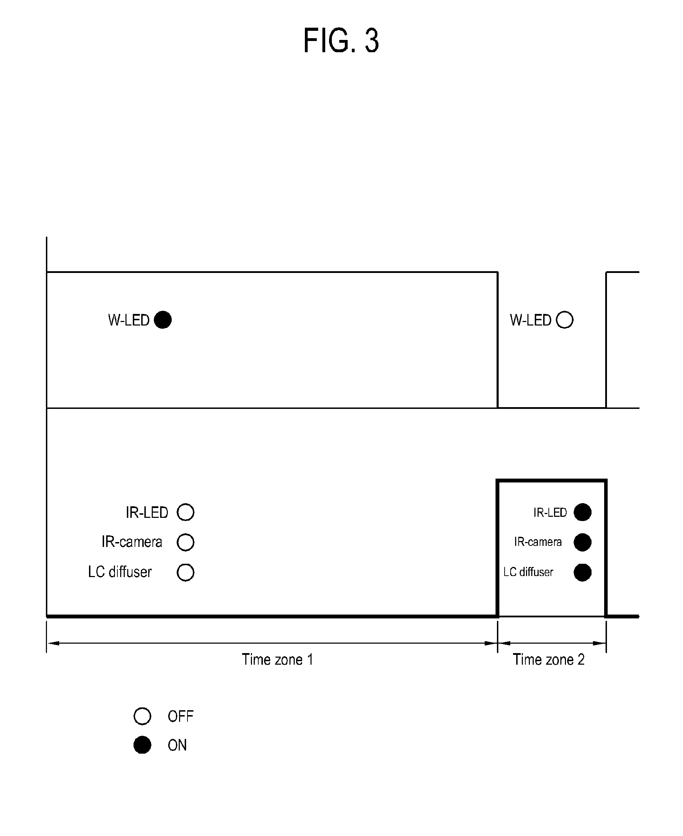

FIG. 3 is a view showing operation timing of the display device 100 having the diffusion transmitter 140 and the driver 150 according to an exemplary embodiment.

As shown in FIG. 3, in a time zone 1 while an image is displayed on the image screen 110, the W-LED 122 operates for emitting white light to display the image, but the IR-LED 132, the IR camera 134 and the diffusion transmitter 140 are turned off. Therefore, an image is normally displayed in the time zone 1, and the IR camera 134 can be hidden even though the backlight 120 operates based on the diffusion function of the diffusion transmitter 140. Accordingly, it is possible to prevent the screen from blotches due to the IR camera 134.

In a time zone 2 while an image is not displayed on the image screen 110 (i.e., the W-LED 122 is turned off), but the IR-LED 132, the IR camera 134 and the diffusion transmitter 140 are turned on. Therefore, there is no light source for displaying an image in the time zone 2, and the infrared light emitted from the IR-LED 132 is transmitted the diffusion transmitter 140 based on the transmission function of the diffusion transmitter 140 and reaches the image screen 110. Further, the infrared light reflected from an object (i.e. a user's finger) contacting or approaching the image screen 110 may be also detected in the IR camera 134 through the diffusion transmitter 140. At this time, the time zone 2 may be included as a part within one frame of the image signal. That is, the touch recognition method according to an exemplary embodiment alternately performs switching operations for recognizing the infrared light in a very short cycle, e.g., per 1/60 or 1/120 seconds, and therefore a user cannot visually recognize the switching operations. Also, there is no failure in the touch recognition of the infrared camera as long as time taken in making the object contact or approach the image screen is not shorter than 1/60 or 1/120 seconds.

As described above, although the IR camera is arranged on the rear of the image screen for the precision of the touch recognition, the recognition of the infrared light is not interrupted by a diffusion plate and it is also possible to prevent the screen blotches due to the shadows of the IR camera from

While exemplary embodiments have been particularly shown and described above, it will be appreciated by those skilled in the art that various changes may be made therein without departing from the principles and spirit of the inventive concept as defined by the following claims..

## Claims

1. A touch recognition device comprising:
an image screen configured to display an image;
a light source configured to emit light toward the image screen;
a camera provided in the rear of the image screen, configured to detect at least one of infrared reflected and input from an object approaching or contacting the image screen; and
a diffusion transmitter provided between the image screen and the camera and configured to diffuse the emitted light in response to the light source emitting the light.

2. The touch recognition device according to claim 1, further comprising an infrared emitter provided in the rear of the image screen and configured to emit the infrared.

3. The touch recognition device according to claim 2, wherein the infrared emitter, the camera and the diffusion transmitter are off in response to the light source emitting the light.

4. The touch recognition device according to claim 2, wherein the infrared emitter, the camera and the diffusion transmitter operate in response to no light being emitted by the light source.

5. The touch recognition device according to claim 1, wherein the diffusion transmitter comprises:
a liquid crystal panel comprising liquid crystal; and
transparent electrodes arranged at opposite sides of the liquid crystal panel and configured to apply voltage to the liquid crystal.

6. The touch recognition device according to claim 5, further comprising a driver configured to apply voltage between the transparent electrodes arranged at the opposite sides of the liquid crystal panel.

7. The touch recognition device according to claim 6, wherein the driver is configured to apply voltage to the transparent electrodes in accordance with a change in image frames of the image displayed on the image screen.

8. The touch recognition device according to claim 7, wherein the driver is configured to alternate between on and off to apply the voltage in units of at least one image frame.

9. The touch recognition device according to claim 1, wherein the diffusion transmitter is configured to switch between a light diffusion mode and an infrared detection mode within one frame of the image signal.

10. The touch recognition device according to claim 9, wherein the diffusion transmitter is configured to switch between the light diffusion mode and the infrared detection mode within 1/60 seconds.

11. A display apparatus comprising:
a display panel configured to display an image;
a backlight configured to emit light to the display panel and comprising a camera configured to sense infrared light reflected or received from an object contacting or approaching the display panel; and
a diffusion transmitter provided between the display panel and the camera and configured to diffuse the emitted light from the backlight when the backlight emits the light.

12. The display apparatus according to claim 11, wherein the diffusion transmitter is configured to diffuse or transmit light in accordance with voltage applied.

13. The display apparatus according to claim 11, wherein the backlight further comprises an infrared emitter.

14. The display apparatus according to claim 11, wherein the diffusion transmitter comprises:
a liquid crystal panel comprising liquid crystal; and
transparent electrodes arranged at opposite sides of the liquid crystal panel and configured to apply voltage to the liquid crystal.

15. The display apparatus according to claim 11, wherein the diffusion transmitter is configured to switch between a light diffusion mode and an infrared detection mode within one frame of the image signal.
